# EUROPÄISCHE PATENTSCHRIFT

(11) **EP 0 318 433 B1**
(45) Veröffentlichungstag und Bekanntmachung des Hinweises auf die Patenterteilung: **14.12.1994**
(21) Anmeldenummer: 88810792.7
(22) Anmeldetag: 18.11.1988
(51) Int. Cl.: A01N 47/36

(54) **Synergistisches Mittel und Verfahren zur selektiven Unkrautbekämpfung**
Synergistic agent and method for selective weed control
Agent synergique et procédé de lutte sélective contre les mauvaises herbes

(30) Priorität: 27.11.1987 CH 4629/87
(43) Veröffentlichungstag der Anmeldung: 31.05.1989
(60) Teilanmeldung: 94105426.4
(73) Patentinhaber: CIBA-GEIGY AG, 4002 Basel (CH)
(72) Erfinder: Quadranti, Marco, Dr., CH-5200 Brugg (CH); Maurer, Willy, CH-4125 Riehen (CH)

(56) Entgegenhaltungen:
- EP-A- 0 084 020
- EP-A- 0 122 231
- EP-A- 0 190 105
- EP-A- 0 224 441

## Beschreibung

Die vorliegende Erfindung betrifft ein synergistisches Mittel, eine herbizide Wirkstoff-Kombination enthaltend. Das erfindungsgemässe Mittel eignet sich zur selektiven Unkrautbekämpfung in Nutzpflanzenkulturen, insbesondere in Mais.

Die Erfindung betrifft auch ein Verfahren zur Bekämpfung von Unkräutern in Nutzpflanzenkulturen, vorzugsweise in Mais, und die Verwendung diese neuen Mittels.

Aus EP-A 0084020 ist der N-[2-(Methoxycarbonyl)phenyl]sulfonyl-N'-(4,6-bis-difluormethoxy-pyrimidin-2-yl)-harnstoff der Formel I 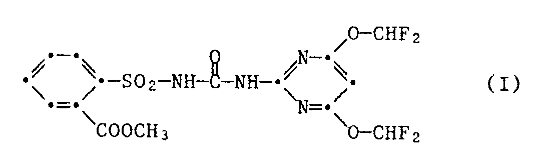
bekannt geworden. Dieser Wirkstoff besitzt gute selektiv-herbizide Wirkung gegen Unkräuter in Nutzpflanzenkulturen. Synergistischer Mischungen der Verbindung (I) wurden in EP-A-227441 offenbart.

Andererseits sind die Verbindungen der Formeln Va und Vb als herbizide Wirkstoffe mit teilweise guter Selektivität in Nutzpflanzenkulturen bekannt. Diese Verbindungen sind im Handel erhältlich:
Va) 3,6-Dichlorpicolinsäure; common name "Clopyralid"; (beschrieben in "The Pesticide Manual, 8th ed. (1987), S. 189, Ed. C.R. Worthing; The British Crop Protection Council, Thornton Heath, GB)
Vb) 3,6-Dichlor-2-methoxybenzoesäure; common name "Dicamba"; (beschrieben in "The Pesticide Manual, 8th ed. (1987), S. 251, Ed. C.R. Worthing; The British Crop Protection Council, Thornton Heath, GB)
Es hat sich nun überraschenderweise gezeigt, dass eine mengenmässig variable Kombination zweier Wirkstoffe, einerseits Wirkstoff I und andererseits eine Aktivsubstanz Va oder Vb eine synergistische Wirkung entfaltet, die in vorteilhafter Weise zur Bekämpfung von Unkräutern in Nutzpflanzenkulturen, insbesondere in Mais, geeignet ist. Diese synergistischen Kombinationen sind zur Bekämpfung der Mehrzahl der wichtigen Unkräuter, insbesondere Maisunkräuter, geeignet, ohne dass dabei die Kulturpflanze geschädigt wird.

Es werden die Hauptunkräuter der Getreidekulturen, wie Arten der Monokotyledonengattungen Alopecurus, Avena und Setaria,' sowie der Dikotyledonengattungen, Chrysanthenum, Galium, Sinapis, Stellaria und Veronica selektiv sowohl im Vorauflauf- als auch in Nachauflaufverfahren vernichtet.

Es wird daher gemäss der vorliegenden Erfindung ein neues synergistisches Mittel zur selektiven Unkrautbekämpfung vorgeschlagen, enthaltend als Wirkstoff N-[2-(Methoxycarbonyl)phenyl]sulfonyl-N'-(4,6-bis-difluormethoxypyrimidin-2-yl)-harnstoff der Formel I 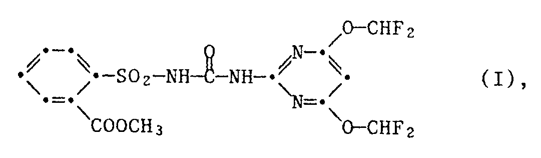
neben einer synergistisch wirksamen Menge eines weiteren Wirkstoffs der Formel Va oder Vb 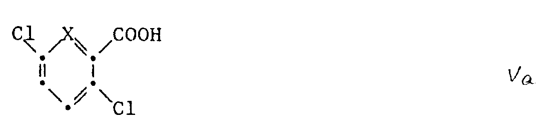
oder 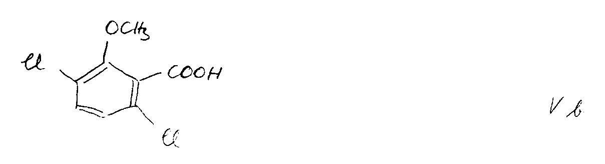
sowie gewünschtenfalls weitere Hilfs- und/oder Trägerstoffe.

Die erfindungsgemässen Wirkstoffkombinationen können sowohl pre- als auch postemergent verwendet werden. Ausserdem kann das Saatgut der Nutzpflanze mit einer herbizid wirksamen Menge erfindungsgemässen Wirkstoffkombination behandelt werden (Samenbeizung). Bei der Aussaat der Nutzpflanzen wird so die erfindungsgemässe Wirkstoffkombination ausgebracht.

Insbesondere für die post-emergente Applikatiion geeignet ist die Kombination des Wirkstoffs I mit den Wirkstoffen der Formel Va oder Vb.

Die erfindungsgemässen Wirkstoffkombinationen eignen sich besonders für Mais.

Es ist in hohem Masse überraschend, dass die Kombination des Wirkstoffs der Formel I mit einem Wirkstoff der Formel Va oder Vb nicht nur eine prinzipiell zu erwartende additive Ergänzung des Wirkungsspektrums auf die üblichen mit Mais vergesellschafteten Unkräuter hervorruft, sondern dass sie einen synergistischen Effekt erzielt, der die Wirkungsgrenzen der miteinander kombinierten Aktivsubstanzen unter zwei Aspekten erweitert.

Einmal werden die Aufwandmengen der Einzelverbindungen I, Va und Vb bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Mais zur Folge, wie sie für unbeabsichtigte Wirkstoffüberdosierung notwendig und erwünscht ist.

Die erfindungsgemässe Wirkstoffkombination enthält vorzugsweise die Wirkstoffe der Formel Va oder Vb in gleichen Mengen oder in einem über Ueberschuss bezogen auf die Menge an Wirkstoff I.
Das Mischungsverhältnis kann in weiten Bereichen frei gewählt werden.
Bevorzugt sind Verhältnisse von I zu Va oder Vb von 1:1 bis 1:500, insbesondere 1:2 bis 1:200, besonders bevorzugt von 1:2 bis 1:100.
Die optimalen Verhältnisse der einzelnen Wirkstoffkomponenten können durch biologische Versuche ermittelt werden.

Dabei können die Verhältnisse der einzelnen Wirkstoffkomponenten je nach Art des zu bekämpfenden Unkrauts und in Abhängigkeit von der jeweiligen Applikationsform variieren.

Die erfindungsgemässen Wirkstoffkombinationen zeigen eine ausgezeichnete Wirkung gegen Unkräuter, ohne die Nutzpflanzenkultur nennenswert zu beeinflussen bei 0,005 bis 3,0 kg vorzugsweise 0,01 bis 1,0 kg Aufwandmenge Aktivsubstanz je Hektar.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch innniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen C₈ bis C₁₂, wie z.B. Xylolgemische oder substituierte Naphthaline, Phthalsäureester wie Dibutyl- oder Dioctylphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle vewendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene oder Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtionogene, kation-und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren (C₁₀-C₂₂), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-laurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, 2er Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthyl-ammoniumbromid.

Die in der Formulierungstechnik gebräuchlichen Tenside sind u.a. in folgenden Publikationen beschrieben:
"1985 International Mc Cutcheon's Emulsifiers & Detergents", Glen Rock NJ USA, 1985",
"H. Stache, "Tensid-Taschenbuch", 2. Aufl., C. Hanser Verlag München, Wien 1981,
M. and J. Ash. "Encyclopedia of Surfactants", Vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und Va oder Vb, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

| Emulgierbare Konzentrate | |
|---|---|
| Aktives Wirkstoffgemisch | 1 bis 20 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 % |

| Stäube: | |
|---|---|
| Aktives Wirkstoffgemisch: | 0,1 bis 10 %, vorzugsweise 0,1 bis 1 % |
| festes Trägermittel: | 99,9 bis 90 %, vorzugsweise 99,9 bis 99 %. |

| Suspension-Konzentrate | |
|---|---|
| Aktives Wirkstoffgemisch: | 5 bis 75 %, vorzugsweise 10 bis 50 % |
| Wasser: | 94 bis 25 %, vorzugsweise 88 bis 30 % |
| oberflächenaktives Mittel: | 1 bis 40 %, vorzugsweise 2 bis 30 % |

| Benetzbare Pulver | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

| Granulate | |
|---|---|
| aktives Wirkstoffgemisch: | 0,5 bis 30 %, vorzugsweise 3 bis 15 % |
| festes Trägermittel: | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Den beschriebenen erfindungsgemassen Mitteln lassen sich andere biozide Wirkstoffe oder Mittel beimischen. So können die neuen Mittel ausser den genannten Verbindungen der allgemeinen Formel I und der Formeln Va oder Vb z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

### Formulierungsbeispiele

### Beispiel F1:

### Formulierungsbeispiele für synergistische Wirkstoffgemische der Formeln I und Va oder Vb (% = Gewichtsprozent)

| a) Spritzpulver | a) | b) | c) | d) |
|---|---|---|---|---|
| Wirkstoff I und | 10 % | 20 % | 5 % | 30 % |
| einer der Wirkstoffe Va oder Vb | 10 % | 40 % | 15 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyäthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) |
|---|---|---|---|
| Wirkstoff I und | 5 % | 5 % | 12 % |
| einer der Wirkstoffe Va oder Vb | 5 % | 20 % | 13 % |
| Octylphenolpolyäthylenglykoläther (4-5 Mol AeO) | 3 % | 3 % | 3 % |
| Ca-Dodecylbenzolsulfonat | 3 % | 3 % | 2 % |
| Ricinusölpolyglykoläther (36 Mol AeO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Wirkstoff I | 2 % | 4 % | 2 % | 4 % |
| einer der Wirkstoffe Va oder Vb | 3 % | 4 % | 4 % | 8 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Wirkstoff I | 5 % | 3 % | 5 % |
| einer der Wirkstoffe Va oder Vb | 5 % | 7 % | 15 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
|---|---|---|
| Wirkstoff I und | 1,5 % | 3 % |
| einer der Wirkstoffe Va oder Vb | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff I und | 20 % | 20 % |
| einer der Wirkstoffe Va oder Vb | 20 % | 40 % |
| Aethylenglykol | 10 % | 10 % |
| Nonylphenolpolyäthylenglykoläther (15 Mol AeO | 6 % | 6 % |
| Na-Ligninsulfonat | 10 % | 10 % |
| Carboxymethylcellulose | 1 % | 1 % |
| 37 %ige wässrige Formaldehyd-Lösung | 0,2 % | 0,2 % |
| Silikonöl in Form einer 75 %igen wässrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

## Patentansprüche (Patentansprüche für folgende(n) Vertragsstaat(en): AT, BE, CH, DE, FR, GB, GR, IT, LI, LU, NL, SE)

1. Herbizides Mittel enthaltend als Wirkstoff N-[2-(Methoxycarbonyl)phenyl]sulfonyl-N'-(4,6-bis-difluormethoxypyrimidin-2-yl)-harnstoff der Formel I 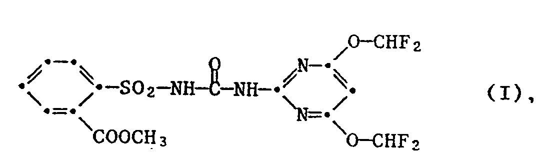 neben einer synergistisch wirksamen Menge eines weiteren Wirkstoffs der Formel Va) oder Vb) 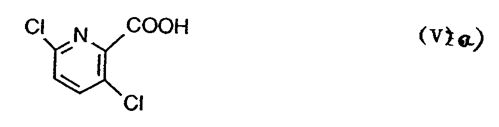 oder 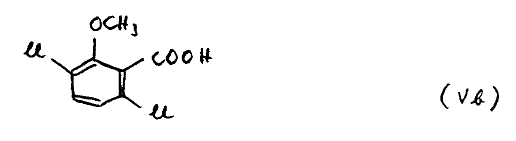 sowie gewünschtenfalls weitere Hilfs- und/oder Trägerstoffe.

2. Saatgut welches mit einer herbizid wirksamen Menge eines Mittels gemäss Anspruch 1 behandelt worden ist.

3. Maissaatgut gemäss Anspruch 2.

4. Verfahren zur selektiven Bekämpfung von Unkräutern in Nutzpflanzenkulturen, dadurch gekennzeichnet, dass man eine herbizid wirksame Menge eines Mittels gemäss Anspruche 1 auf die Nutzpflanzenkultur oder deren Lebensraum einwirken lässt.

5. Verfahren gemäss Anspruch 4 zur selektiven pre- oder postemergenten Unkrautbekämpfung in Maiskulturen.

6. Verfahren gemäss Anspruch 5 zur postemergenten Unkrautbekämpfung in Maiskulturen, gekennzeichnet durch die Verwendung eines Mittels gemäss Anspruch 1.

7. Verfahren zur selektiven Bekämpfung von Unkräutern in Nutzpflanzenkulturen, gekennzeichnet durch die Verwendung eines Saatgutes gemäss Anspruch 2 oder 3.

## Patentansprüche (Patentansprüche für folgende(n) Vertragsstaat(en): ES)

1. Verfahren zur selektiven Bekämpfung von Unkräutern in Nutzpflanzenkulturen, dadurch gekennzeichnet, dass man eine herbizid wirksame Menge eines Mittels enthaltend als Wirkstoff N-[2-(Methoxycarbonyl)phenyl]sulfonyl-N'(4,6-bis-difluormethoxypyrimidin-2-yl)-harnstoff der Formel I 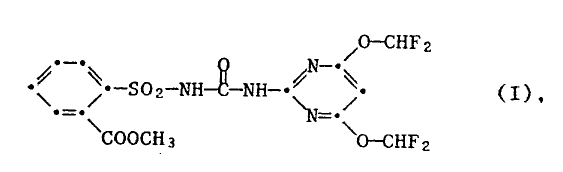 neben einer synergistisch wirksamen Menge eines weiteren Wirkstoffs der Formel Va) oder Vb) 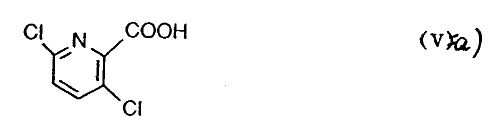 oder 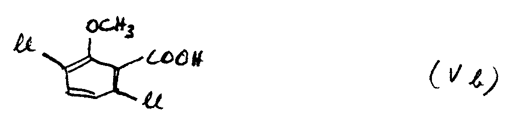 auf die Nutzpflanzenkultur oder deren Lebensraum einwirken lässt.

2. Verfahren nach Anspruch 1 zur selektiven pre- oder postemergenten Unkrautbekämpfung in Maiskulturen.

3. Verfahren gemäss Anspruch 2 zur postemergenten Unkrautbekämpfung in Maiskulturen.

4. Verfahren zur Beizung von Saatgut, dadurch gekennzeichnet, dass man das Saatgut mit einer herbizid wirksamen Menge eines Mittels enthaltend als Wirkstoff N-[2-(Methoxycarbonyl)phenyl]sulfonyl-N'-(4,6-bis-difluormethoxypyrimidin-2-yl)-harnstoff der Formel I 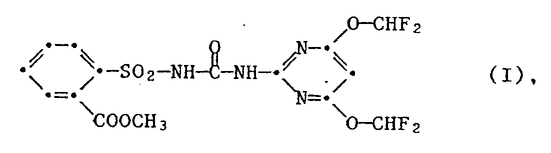 neben einer synergistisch wirksamen Menge eines weiteren Wirkstoffs der Formel Va) oder Vb) 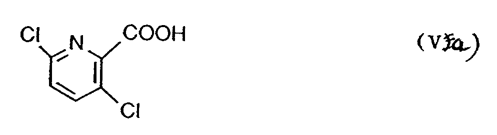 oder 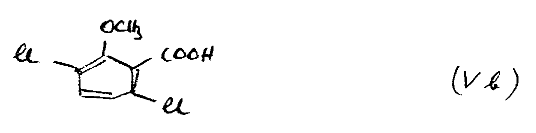 behandelt.

5. Verfahren nach Anspruch 4 zur Beizung von Maissaatgut.

6. Verfahren zur Herstellung eines herbiziden Mittels, dadurch gekennzeichnet, dass man N-[2-(Methoxycarbonyl)phenyl]sulfonyl-N'-(4,6-bis-difluormethoxypyrimidin-2-yl)-harnstoff der Formel I 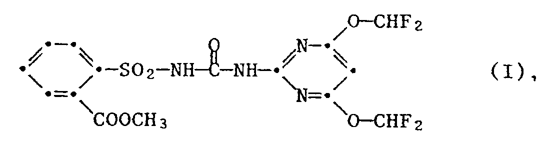 mit einer synergistisch wirksamen Menge eines weiteren Wirkstoffs der Formel Va) oder Vb) 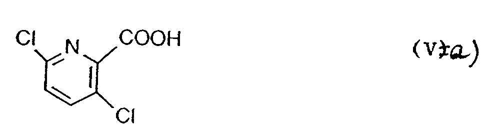 oder 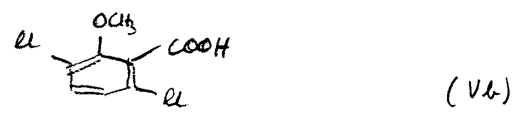 sowie gewünschtenfalls mit weiteren Hilfs- und/oder Trägerstoffen intensiv vermischt.

## Claims (Claims for the following Contracting State(s): AT, BE, CH, DE, FR, GB, GR, IT, LI, LU, NL, SE)

1. A herbicidal composition comprising as active ingredient N-[2-(methoxycarbonyl)phenyl]sulfonyl-N'-(4,6-bis-difluoromethoxypyrimidin-2-yl)-urea of formula I 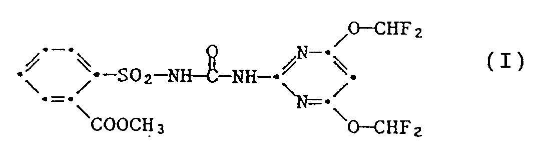 together with a synergistically effective amount of a further active ingredient of formula Va) or Vb) 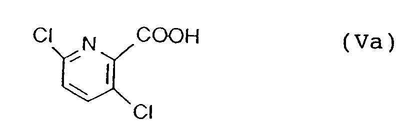 or 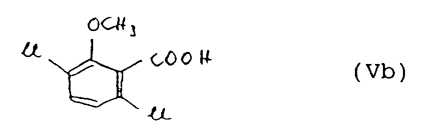 and, if desired, other adjuvants and/or carriers.

2. Seed that has been treated with a herbicidally effective amount of a composition according to claim 1.

3. Maize seed according to claim 2.

4. A method for the selective control of weeds in crops of useful plants, wherein a herbicidally effective amount of a composition according to claim 1 is caused to act on the crop of useful plants or its locus.

5. A method according to claim 4 for the selective pre- or post-emergence control of weeds in maize crops.

6. A method according to claim 5 for the postemergence control of weeds in maize crops, which comprises the use of a composition according to claim 1.

7. A method for the selective control of weeds in crops of useful plants, which comprises the use of seed according to claim 2 or claim 3.

## Claims (Claims for the following Contracting State(s): ES)

1. A method for the selective control of weeds in crops of useful plants, wherein a herbicidally effective amount of a composition comprising as active ingredient N-[2-(methoxycarbonyl)phenyl]sulfonyl-N'-(4,6-bis-difluoromethoxypyrimidin-2-yl)-urea of formula I 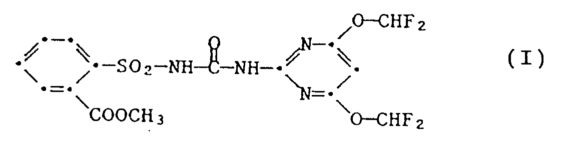 together with a synergistically effective amount of a further active ingredient of formula Va) or Vb) 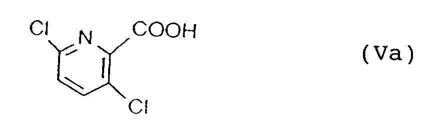 or 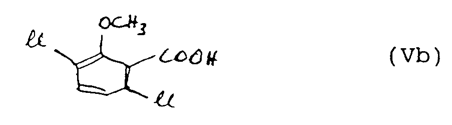 is caused to act on the crop of useful plants or its locus.

2. A method according to claim 1 for the selective pre- or post-emergence control of weeds in maize crops.

3. A method according to claim 2 for the postemergence control of weeds in maize crops.

4. A method for dressing seed, wherein the seed is treated with a herbicidally effective amount of a composition comprising as active ingredient N-[2-(methoxycarbonyl)phenyl]sulfonyl-N'-(4,6-bis-difluoromethoxypyrimidin-2-yl)urea of formula I 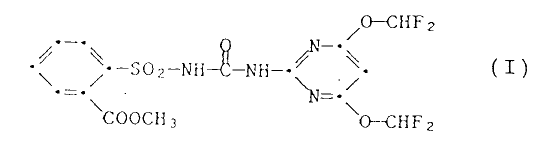 together with a synergistically effective amount of a further active ingredient of formula Va) or Vb) 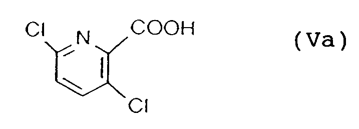 or

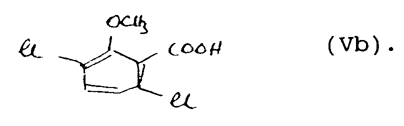

5. A method according to claim 4 for dressing maize seed.

6. A process for the preparation of a herbicidal composition, wherein N-[2-(methoxycarbonyl)phenyl]sulfonyl-N'-(4,6-bis-difluoromethoxypyrimidin-2-yl)-urea of formula I 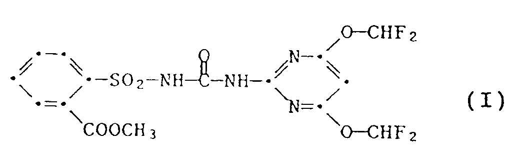 is mixed intensively with a synergistically effective amount of a further active ingredient of formula Va) or Vb) 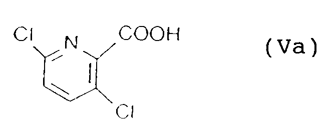 or 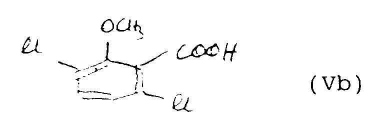 and, if desired, with other adjuvants and/or carriers.

## Revendications (Revendications pour l'(les) Etat(s) contractant(s) suivant(s): AT, BE, CH, DE, FR, GB, GR, IT, LI, LU, NL, SE)

1. Agents herbicides contenant comme matière active la N-[2-(méthoxycarbonyl)-phényl]sulfonyl-N'-(4,6-bis-difluorométhoxypyrimidine-2-yl)-urée de formule I 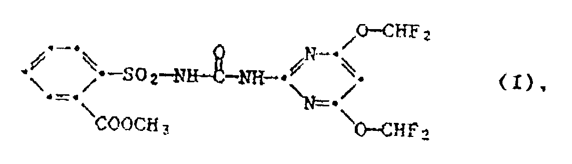 outre une quantité à action synergique d'une autre matière active de formules Va ou Vb 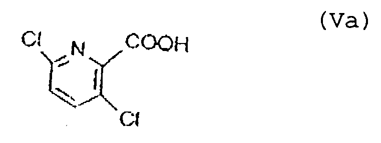 ou 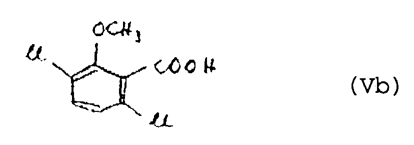 ainsi que si on le désire d'autres additifs et/ou supports.

2. Semence traitée avec une quantité à action herbicide d'un agent selon la revendication 1.

3. Semence de maïs selon la revendication 2.

4. Procédé de lutte sélective contre les mauvaises herbes dans les cultures de plantes utiles, caractérisé en ce qu'on fait agir une quantité à action herbicide d'un agent selon la revendication 1 sur la culture de plantes utiles ou sur son biotope.

5. Procédé selon la revendication 4, de lutte sélective contre les mauvaises herbes en pré ou en post-levée dans les cultures de maïs.

6. Procédé selon la revendication 5, de lutte contre les mauvaises herbes en post-levée dans les cultures de maïs, caractérisé par l'utilisation d'un agent selon la revendication 1.

7. Procédé de lutte sélective contre les mauvaises herbes dans les cultures de plantes utiles, caractérisé par l'utilisation d'une semence selon la revendication 2 ou 3.

## Revendications (Revendications pour l'(les) Etat(s) contractant(s) suivant(s): ES)

1. Procédé de lutte sélective contre les mauvaises herbes dans les cultures de plantes utiles, caractérisé en ce qu'on fait agir une quantité à action herbicide d'un agent contenant comme matière active la N-[2-(méthoxycarbonyl)-phényl]sulfonyl-N'-(4,6-bis-difluorométhoxypyrimidine-2-yl)-urée de formule I 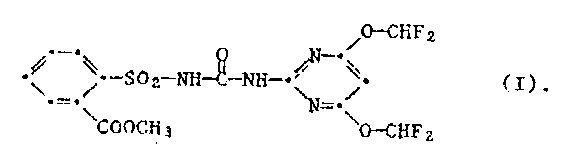 outre une quantité à action synergique d'une autre matière active de formules Va ou Vb 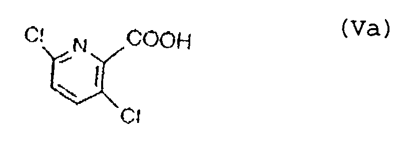 ou 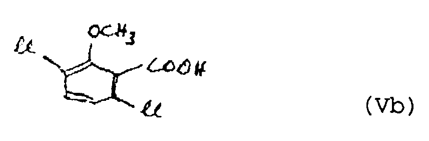 sur la culture de plantes utiles ou son biotope.

2. Procédé selon la revendication 1, de lutte sélective en pré- ou en post-levée contre les mauvaises herbes dans les cultures de maïs.

3. Procédé selon la revendication 2, de lutte contre les mauvaises herbes en post-levée dans les cultures de maïs.

4. Procédé de désinfection des semences, caractérisé en ce qu'on traite les semences avec une quantité à action herbicide d'un agent contenant comme matière active la N-[2-(méthoxycarbonyl)-phényl]sulfonyl-N'-(4,6-bis-difluorométhoxypyrimidine-2-yl)-urée de formule I 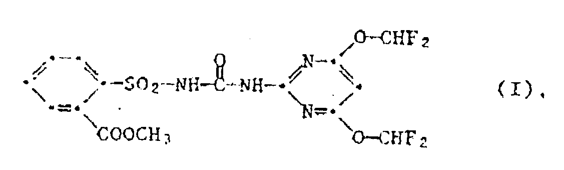 outre une quantité à action synergique d'une autre matière active de formules Va ou Vb 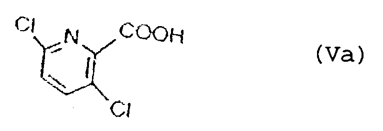 ou

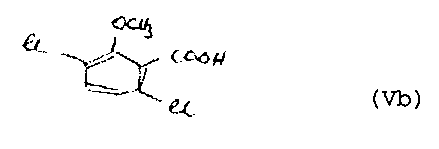

5. Procédé selon la revendication 4, de désinfection des semences de maïs.

6. Procédé de préparation d'un agent herbicide, caractérisé en ce qu'on mélange de façon intensive la N-[2-(méthoxycarbonyl)-phényl]sulfonyl-N'-(4,6-bis-difluorométhoxypyrimidine-2-yl)-urée de formule I 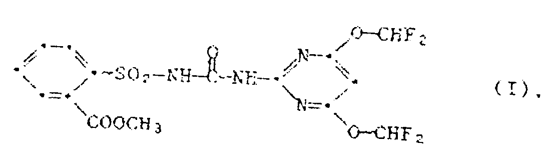 avec une quantité à action synergique d'une autre matière active de formules Va ou Vb 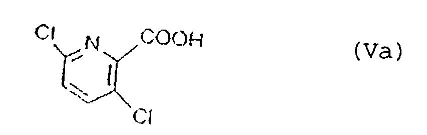 ou 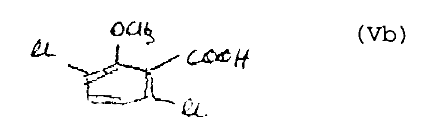 ainsi que le cas échéant avec d'autres adjuvants et/ou supports.
